(19) **Europäisches Patentamt**
**European Patent Office**
**Office européen des brevets**

(11) **EP 2 058 538 B1**

(12) **EUROPEAN PATENT SPECIFICATION**

(45) Date of publication and mention
of the grant of the patent:
**21.12.2011 Bulletin 2011/51**

(51) Int Cl.:
*F16C 19/26* (2006.01)      *F16C 25/06* (2006.01)
*F16C 33/36* (2006.01)

(21) Application number: **07021538.9**

(22) Date of filing: **06.11.2007**

(54) **Roller bearing with slip and play preventing means**

Wälzlager mit spiel- und schlupfverhindernden Massnahmen

Roulement avec moyen de prévention anti glissement et jeu

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**13.05.2009 Bulletin 2009/20**

(60) Divisional application:
**11004363.5**

(73) Proprietor: **G & B Solution, besloten
vennootschap met beperkte
aansprakelijkheid**
**9032 Gent (Wondelgem) (BE)**

(72) Inventors:
• **Grunewald, Marc Gustaaf
9032 Gent (BE)**
• **Bauwens, Kurt Remi
9032 Gent (BE)**

(74) Representative: **Donné, Eddy
Bureau M.F.J. Bockstael nv
Arenbergstraat 13
2000 Antwerpen (BE)**

(56) References cited:
**EP-A- 0 631 061         WO-A-03/095854
WO-A-2006/015048    DE-A1- 3 826 945
DE-A1-102004 006 908  DE-B- 1 274 450
US-A- 4 629 340**

**Description**

The present invention relates to a roller bearing, in particular a roller bearing comprising an outer ring and an inner ring and a plurality of rollers disposed between the outer and the inner ring.

Classical roller bearings have rollers with a continuous uninterrupted straight or curved outer surface which is in contact with an outer track formed by the radially inward surface of the outer ring and with an inner track formed by the radially outer surface of the inner ring.

With the classic bearings, the inner track and the outer track are aligned in the axial direction of the bearing.

In use, the outer and inner ring move in relation to each other and the rollers are carried along in this movement and tend to pivot around their respective geometrical axes.

Because the diameter of the outer track is larger than the diameter of the inner track, the contact point of the outer track with a particular roller will tend to move faster than the contact point of the inner track with that roller, but, since the diameter of the roller is the same at both contact points, the rotational speed of the contact points of the roller will be the same.

The difference in speed between the contact points on the tracks and the contact points on the rollers results in a structural slip, causing losses due to friction between the tracks on the inner and outer rings and the rollers.

In order to allow this structural slip, known bearing types require a minimum of constructional radial play between the parts of the bearing.

When such known bearing is subjected to a radial load, the radial play, regardless how small it may be, will result in the inner and the outer rings of the bearing shifting to eccentric positions in relation to each other, causing the bearing to be supported by only two rollers at the same time and thus leading to locally concentrated high loads on the bearing, in particular on the rollers.

This effect either limits the maximum allowable radial load of the bearing, or requires an oversized bearing in order to withstand the excessive local loads.

Moreover, the use of adequate lubricants is indispensable in order to minimise the effects of the friction due to slip.

Furthermore, radial play or tolerances are a real obstacle for realising high precision machines and tools.

Because the slip is proportional with the diameter of the rollers, this diameter of the rollers needs to be limited, thereby limiting the design possibilities of the manufacturers of bearings.

The above mentioned disadvantages can theoretically be remedied by a bearing of the type that comprises an outer ring and an inner ring and a plurality of rollers disposed between the outer and the inner ring, the rollers having at least one recessed part stretching over at least a part of their axial length, whereby the outer ring is provided on its radially inward surface with at least one outer track for co-operating with a non-recessed part of the rollers and the inner ring is provided on its radially outward surface with at least one inner track for co-operating with a recessed part of the rollers and whereby the outer tracks and the inner tracks are mutually axially offset.

Said type of bearing is described by Sanchez in document EU 0.631.061 Al. With such a type of bearing, the radius of the rollers in the recessed parts at the contact points of the rollers with the inner track is smaller than the radius of the rollers in the non-recessed parts at the contact points of the rollers with the outer track, and hence the speed of these contact points on the roller can be different at the outer track and at the inner track.

By this kind of construction of the bearing, the slip between the rollers and the bearing rings can be limited or even completely eliminated during its operational use.

Because of this, frictional wear of the bearing parts will be very much reduced and the need of lubrication will also be less critical.

With the latter type of bearings, the slip can be completely eliminated when the dimensions are so chosen that the ratio of the radius of the outer track to the radius of the inner track is equal to the ratio of the radius of the non-recessed part of the roller to the radius of the recessed part of the roller.

Because the slip is completely eliminated, there is no need for a constructional play between the parts of the bearing, which is beneficial for using these bearings in high precision instruments and machines.

Also the bearing rings are always supported by the majority of the rollers and not only by two rollers. This will allow for higher loads for bearings with the same overall dimensions as the known bearings or will allow to use smaller and thus cheaper bearings for applications involving the same loads.

Furthermore, because there is no slip, the diameter of the rollers is not to be kept within certain limits, so the designers of the bearing manufactures are not restricted anymore in this respect.

Without slip, all rollers move synchronously together and keep their mutual distances apart from each other.

Therefore, the need for a cage is not critical as with known bearings to keep the rollers apart for preventing that the rollers get in contact with each other and thus causing frictional losses.

Unfortunately the above mentioned advantages are purely theoretical and are only true in ideal theoretical cases of bearings without any radial clearance, whereby all the rollers are in permanent contact with the tracks on the outer and inner rings.

However, in practice such bearings do not show up because such perfect dimensioning of a bearing is not practically possible because of the fact that manufacturing tolerances cannot be excluded.

Moreover, during use of the bearing, radial clearance can arise due to wear of the bearing and due to differential expansion of the distinct parts of the bearing caused by temperature fluctuations.

When radial clearance exists, no matter how small, the outer and inner rings will take up an eccentric position relative to each other, causing not all the rollers being simultaneously in contact with the outer and inner rings of the bearing and causing the radial load of the bearing to be supported by only two rollers.

This causes a sudden overload of the two supporting rollers and of the contact areas with the outer and inner rings.

The rolling elements will furthermore not have a continuous traction over the complete circumference of the bearing tracks, which jeopardises the synchronisation of the movement of the rollers and hence causes slip to occur. With the existence of a radial clearance there is also a lubrication problem because a certain traction between the rollers and the tracks is needed for a synchronised movement of the rollers, whereas lubrication will decrease the necessary traction. With large accelerations or decelerations of the rollers, this problem will appear prominently due to the inertia of the rollers.

The regulation of the radial clearance in a bearing is known in the field of bearing technology. For example, in document DE 1.274.450 a roller bearing is described which is used to turn one or more parts of a jet nozzle 180 degrees in order to modify the shape of the jet nozzle.

Said document teaches how to maintain, irrespective of the temperature load on the nozzle, sufficient pretension between neighbouring parts of a jet nozzle. The latter is accomplished by regulation of the clearance in the bearings which are positioned between said parts.

It is an objective of the invention to provide a roller bearing without one or more of the above mentioned or other disadvantages of the known roller bearings.

To this end the present invention provides for a roller bearing of the type that comprises an outer ring and an inner ring and a plurality of rollers disposed between the outer and the inner ring, the rollers having at least one recessed part stretching over at least a part of their axial length, whereby the outer ring is provided on its radially inward surface with at least one outer track for co-operating with a non-recessed part of the rollers and the inner ring is provided on its radially outward surface with at least one inner track for co-operating with a recessed part of the rollers and whereby the outer tracks and the inner tracks are mutually axially offset, whereby means are provided to eliminate the radial clearance in the bearing whereby said means are such that they do not generate additional radial forces between the composing parts of the bearing and said means are formed by an actuator controlled by a control circuit provided with a sensor for determining the clearance in the bearing and controlling the actuator for maintaining a zero clearance and in that at least two inner tracks or two outer tracks are formed of a conical surface co-operating with a conical surface of the rollers, whereby the actuator is a displacement actuator allowing the axial displacement of the conical inner or outer tracks relative to the conical surface of the rollers for eliminating the clearance in the bearing.

In this way permanent and simultaneous contact will be guarantied between all the rollers and the tracks on the inner and outer rings of the bearing.

This means that the theoretical advantages of said known type of bearing type with mutually axially offset outer and inner tracks can now also be achieved in real situations where the bearing is subject to radial clearance due to tolerances or is subject to develop such clearance due to wear and/or thermal expansion of its composing parts, because any clearance is eliminated continuously as soon as it appears.

The means to eliminate the radial clearance are formed by an actuator controlled by a control circuit provided with a sensor for determining the clearance in the bearing and controlling the actuator for maintaining a preset clearance which is a zero clearance or a very small clearance, whereby the control circuit stops activating the actuator when the clearance reaches the pre-set value and restarts activating the actuator when the clearance deviates from the pre-set value.

According to a preferred embodiment, the inner track, respectively outer track, is formed by the conical outer surface, respectively by the conical inner surface, of a conical ring which is mounted slidably in axial direction inside the outer ring, respectively outside the inner ring, to co-operate with a conical surface of the rollers, whereby the actuator is a displacement actuator allowing the axial movement of the conical ring relative to the rollers.

By activating the actuator, the ring with the roller track will be axially shifted by the control circuit relative to the rollers, whereby, due to the conical shape of the contact surfaces between the rollers and the tracks, any clearance will be permanently eliminated.

In a preferred embodiment the displacement actuator will be an element manufactured in a temperature expanding material, for instance a steel alloy, of which the axial expansion is controlled by a heating or cooling element.

An advantage of such a displacement actuator is the very accurate precision and high resolution of the displacement, as well as the high stability due to the use of an incompressible material.

In another preferred embodiment of the heat controlled displacement actuator will be a piëzo-electrical element with axial expansion capacities.

Such a piëzo-element has the same advantages as a heat temperature controlled actuator, but has the additional advantage that it reacts faster to the occurrence of a clearance in the bearing because of a smaller response time.

The present invention also concerns a roller bearing of the type that comprises an outer ring and an inner ring and a plurality of rollers disposed between the outer and the inner ring, the rollers having at least one recessed part stretching over at least a part of their axial length, whereby the outer ring is provided on its radially inward surface with at least one outer track for co-operating with a non-recessed part of the rollers and the inner ring is provided on its radially outward surface with at least one inner track for co-operating with a recessed part of the rollers and whereby the outer tracks and the inner tracks are mutually axially offset, whereby means are provided to eliminate the radial clearance in the bearing whereby said means are such that they do not generate additional radial forces between the composing parts of the bearing and said means are formed by an actuator controlled by a control circuit provided with a sensor for determining the clearance in the bearing and controlling the actuator for maintaining a zero clearance and in that the outer tracks and the inner tracks are cylindrical co-operating with respectively a corresponding cylindrical surface of the non-recessed parts and the recessed parts of the rollers , and in that the actuator is formed by a heating and/or cooling element allowing the outer ring or the inner ring to be heated or cooled at least locally in order to make the outer track or inner track to expand or to shrink in a radial direction.

The advantages of such a bearing are in line with the advantages related to a bearing according to the invention which uses a displacement actuator to axially move the conical inner or outer tracks in order to eliminate the radial clearance in the bearing.

In a preferred embodiment of a roller bearing according to the invention, the bearing is provided with additional anti-slip means for preventing the rollers from slipping relative to the inner and/or outer tracks, which means are formed by a toothed pinion provided co-axially on one or more of the rollers and meshing with a ring gear provided on the inner or outer ring of the bearing.

These means for preventing slip provide for a perfectly synchronised movement of the rollers even with rapid accelerations and decelerations of the rollers responsible for large inertia forces on the rollers.

Therefore the use of a cage to hold the distance between rollers becomes obsolete.

In all cases adequate lubrication can be provided for because with the means for preventing slip there is no need anymore for a good traction of the rollers over the tracks on the rings of the bearing.

With the intention of better showing the characteristics of the invention, hereafter, as an example without any limitative character, some preferred forms of embodiment are described of an improved roller bearing according to the invention, with reference to the accompanying drawings, wherein:

figure 1 represents a side elevation view of an improved bearing according to the invention;
figure 2 is a cross-sectional view according to line II-II in figure 1;
figure 3 represents on a larger scale a detailed view of the part within the rectangle F3 in figure 2;
figures 4 to 6 and 8 to 11 are cross sections like the one of figure 3, but for possible other embodiments of an improved bearing according to the invention;
figures 7 and 12 to 14 show a cross section of a roller bearing not within the scope of the present invention.

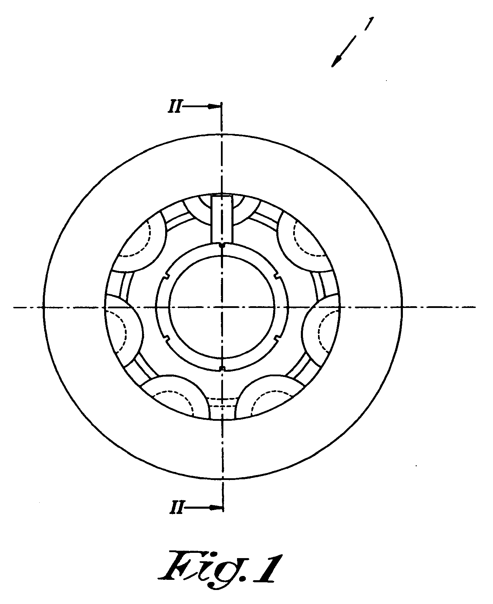

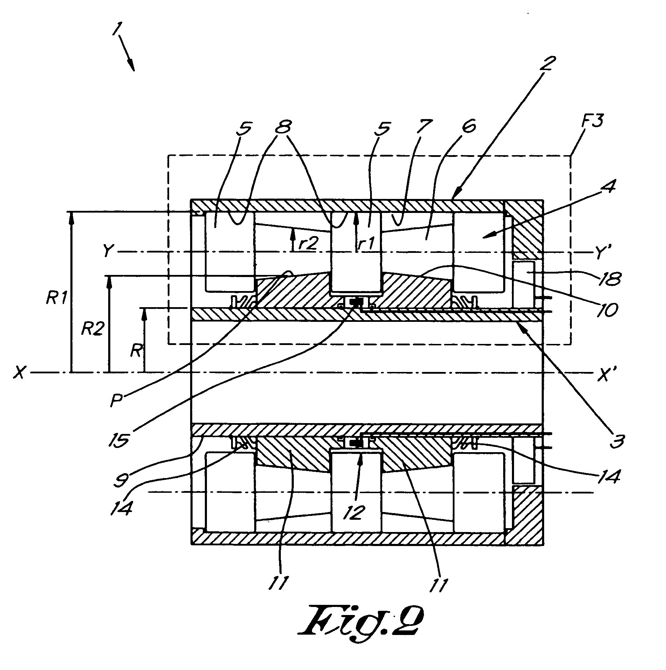

The bearing 1 represented in the figures 1 to 3 is a roller bearing with a rotational axis X-X' and with an outer ring 2 and a concentric inner ring 3 and a plurality of rollers 4 with a rotational axis Y-Y' disposed between both rings 2 and 3.

The bearing 1 is by means of an example of the type of a cylindrical roller bearing wherein the axis Y-Y' of the rollers is parallel to the axis X-X' of the bearing 1 and wherein the rollers 4 are positioned with their axes Y-Y' on a geometrical cylinder with radius RC.

The rollers 4 are in this example provided with cylindrical non-recessed parts 5 with a radius r1 and conical recessed parts 6 stretching over a part of the axial length of the roller 4 and having a radius r2 in a particular point P of its conical surface which is smaller than the radius r1 of the non-recessed parts 5.

The outer ring 2 is in this case cylindrical over its total axial length with an inner radius R1 forming on its radially inward surface 7 a plurality of cylindrical outer tracks 8, one for each of the non-recessed parts 5 of the rollers 4.

The inner ring 3 of bearing 1 has an outer diameter R and is provided on its radially outward surface 9 with conical inner tracks 10, one for each of the recessed parts 6 of the rollers 4, the inner tracks 10 being formed in this case by two rings 11 which are part of the inner ring 3 and which are mounted slidably in axial direction relative to each other on the outside the inner ring 3 to co-operate with the conical surfaces of the recessed parts 6 of the rollers 4.

Note that in the transversal plane perpendicular to the axial direction X-X' and passing through the above mentioned point P on the conical surface of the recessed part 6, the radius of the ring 11 is referenced by R2.

The conical surfaces of the inner tracks 10 are tapered in opposite directions, in particular tapering in a direction towards each other, whereby in practice the tapering angle A, enclosed between the conical surface and the axial direction X-X', is small, preferable less than 5° or even better less than 1°.

For reasons of clarity, the tapering angle A has been exaggerated schematically in the drawings.

The outer tracks 8 and the inner tracks 10 are positioned in mutually axially offset positions, so that the tracks 8 and 10 do not lie in a same plane transversal to the axial direction X-X'.

According to the invention the bearing 1 is provided with means 12 to eliminate the clearance of the bearing, whereby in the example of figures 1 to 3 these means 12 are formed by a displacement actuator located in the space 13 between the slidable rings 11 and allowing to expand in the axial direction X-X' in order to push the rings 11 away from each other and move the rings 11 relative to the rollers 4, so that any clearance in the bearing 1 is eliminated by the action of the contacting conical surfaces between the rings 11 and the rollers 4.

The rings 11 are biased against the displacement actuator by means of two springs 14 which are held in a compressed state by means of two rings 14' fixed on the inner ring 3.

In the example shown, the displacement actuator is an element 15 manufactured in a temperature expanding material, of which the expansion is controlled by an integrated heating or cooling element, for instance a resistance wire, which is not shown separately in the drawings.

The element 15 is preferably a ring shaped element which is thermally isolated from the rest of the bearing by two heat insulating elements 16, preventing undesired dissipation of heat energy and allowing a better control of the expansion of the element 15.

The heat resistance of the element 15 is connected via electric wires 17 to a control circuit which is not shown apart from a sensor 18 and its electrical wire connection 19 which is fixed on the inner ring 11 for determining the clearance in the bearing 1 and controlling the axial expansion of the actuator 14 for maintaining a zero clearance, controlled by the measurement of the gap 20 between the sensor 18 and the outer ring 2.

The control circuit stops activating the actuator 15 when the clearance or the gap 20 reaches the minimum value and restarts activating the actuator 15 when the clearance or the gap 20 deviates from this minimum value so that no additional radial loads are created by the expansion of the actuator 15.

The bearing 1 is preferably dimensioned so that no slip occurs when the bearing is in operational use.

This is achieved by dimensioning the bearing such that the number of revolutions n1 that the rollers 4 make when driven without slip by a complete revolution of the outer ring 2 of the bearing 1 is equal to the number of revolutions n2 that the rollers 4 make when driven without slip by a complete revolution of the inner ring 3 of the bearing 1.

The number of revolutions n1 follows from the fact that, when the rollers 4 are driven without slip by the outer ring 2, the circumference $2\Pi.r1$ of the rollers 4 times n1 is equal to the circumference $2\Pi.R1$ of the outer tracks 8 on the outer ring 2.

This leads to the equation that $n1=R1/r1$.

Similarly the number of revolutions n2 of the rollers 4 when driven by the inner ring 3 is expressed by $n2=R2/r2$.

There will be no slip when n1=n2 and thus when R1/r1=R2/r2 or similarly that R1/R2=r1/r2, in other words that in at least one transversal plane perpendicular to the axial direction of the bearing, the ratio of the radius R1 of the outer track 8 to the radius R2 of the inner track 10 is equal to the ratio of the radius r1 of the non-recessed part 5 of the roller 4 to the radius r2 of the recessed part 6 of the roller 4.

This equation

$$R1/r1=R2/r2$$

together with the equation that

$$RC=R1-r1=R2+r2$$

allows the calculation of all the dimensions of the bearing when two out of the four dimensions R1, R2, r1 and r2 are known.

When for example R1 and R2 are known, then r1 and r2 are calculated by the following expressions.

$$r1=R1.(R1-R2)/(R1+R2)$$

$$r2=R2.(R1-R2)/(R1+R2)$$

Such a bearing 1 dimensioned according to the above mentioned formulas will have no slip and so will have all the benefits of a bearing 1 without slip.

The dimensioning of the bearing according to the invention must not necessarily follow the above equations.

Indeed, also some decrease in slip with respect to existing bearings with fully cylindrical rollers, can be advantageously achieved by using rollers with non-recessed and recessed parts co-operating respectively with outer tracks 8 and inner tracks 10 which are mutually offset in an axial direction X-X'.

According to a preferred embodiment, the total accumulated surface of the outer tracks 8 substantially equals the total accumulated surfaces of the inner tracks 10 of the bearing 1 so that the radial forces are uniformly spread over the contact surfaces of the bearing 1.

The use and function of the means 12 to eliminate the clearance follows from the above description.

Although the outer ring 2 and the inner ring 3 are represented as single elements, it is not excluded that the elements are formed by a plurality of parts in order to facilitate assembly and disassembly of the bearing.

Although in the example the two rings 11 are slidable on the inner ring 3, it is not excluded that only one of the rings 11 is slidable whilst the other ring 11 remains fixed on the ring.

Instead of using two conical rings 11 co-operating with two recessed parts 6 of the rollers 4, it is possible also to use only one conical ring 11 slidably co-operating with a displacement actuator or one conical ring which is fixed on the inner ring 11, in which case the displacement actuator would act on the conical ring 11 or on the inner ring 3 as a whole.

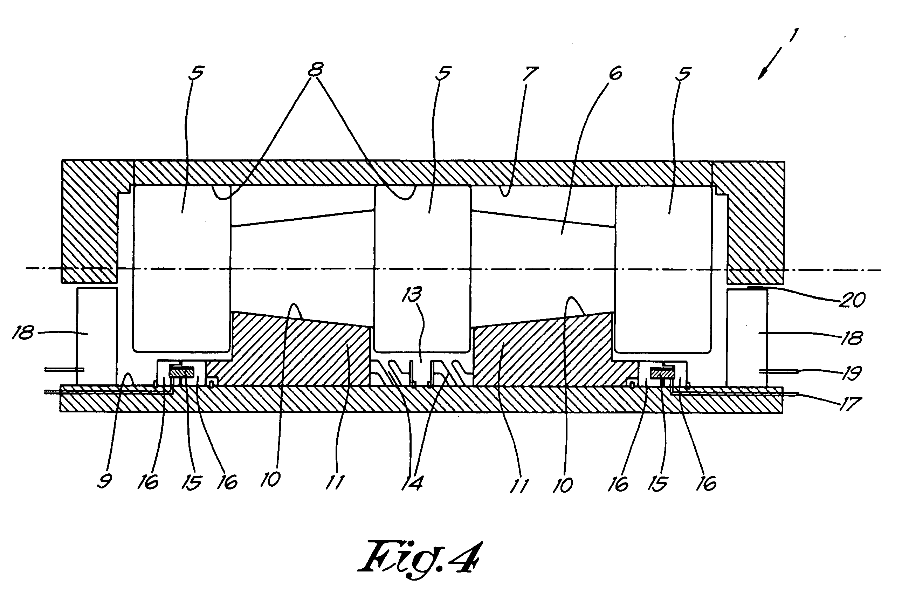

Figure 4 shows an embodiment of a bearing 1 according to the invention wherein the conical surfaces of the recessed parts 6 of the rollers 4 are tapered in an opposite direction with regards to the embodiment of figures 1 to 3, whereby in this case the means 12 for eliminating the clearance in the bearing 1 are formed by two displacement actuators 15 on each opposite axial side of the bearing 1, the slidable rings 11 being biased against the actuators 15 by two separate or by one single spring 14 mounted in the space 13 between the rings 11.

The above described embodiments are best suited for applications wherein the inner ring 3 is fixed, whilst the outer ring 2 is rotating.

In cases where the outer ring 2 is fixed and the inner ring 3 is rotatable, the following embodiments are preferred in order to prevent the use of electrical slip rings to transfer the electrical signal of the rotating sensor 18 and the control current of the rotating actuator to a stationary control circuit.

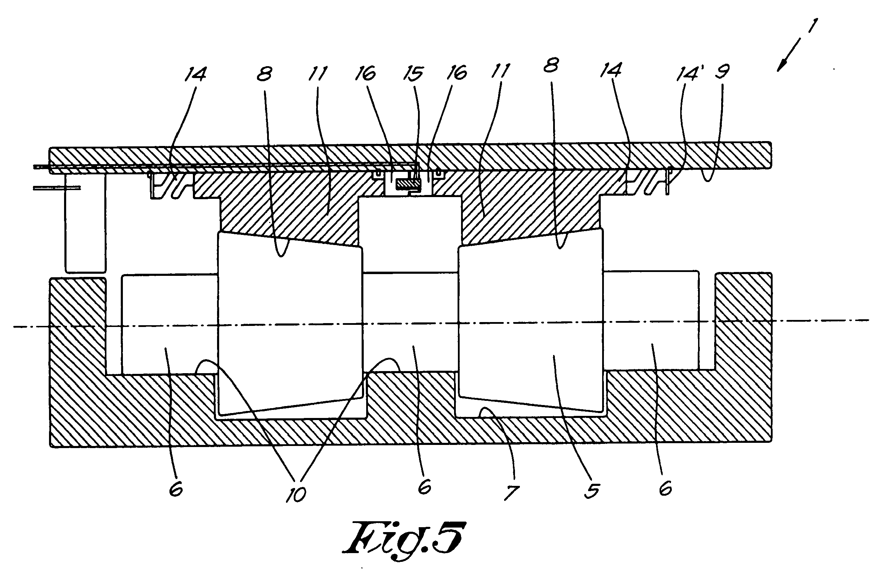

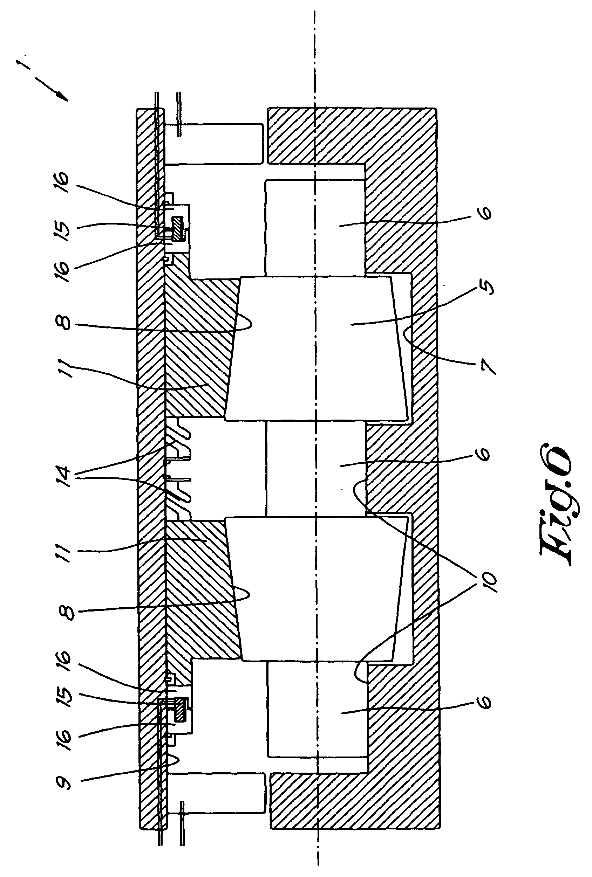

In the embodiment of figures 5 and 6, the conical slidable rings 11 and the actuators 15 are provided on the outer ring 2 instead of on the inner ring 3.

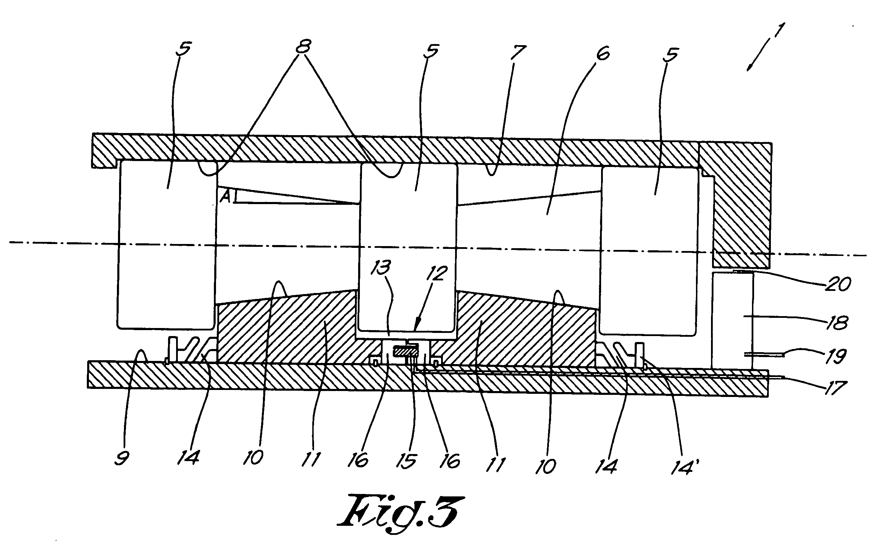

Figure 5 corresponds to an embodiment wherein, in analogy with figure 3, one central actuator 15 is used, whereas figure 6 corresponds to an embodiment with two actuators 15 and two sensors 18, each on each side of the bearing 1, similar to the situation of figure 4.

The heat activated displacement actuator 15 in each of the above described embodiments can be replaced by another type of sensitive displacement actuator with a high resolution, like a piëzo-electrical actuator.

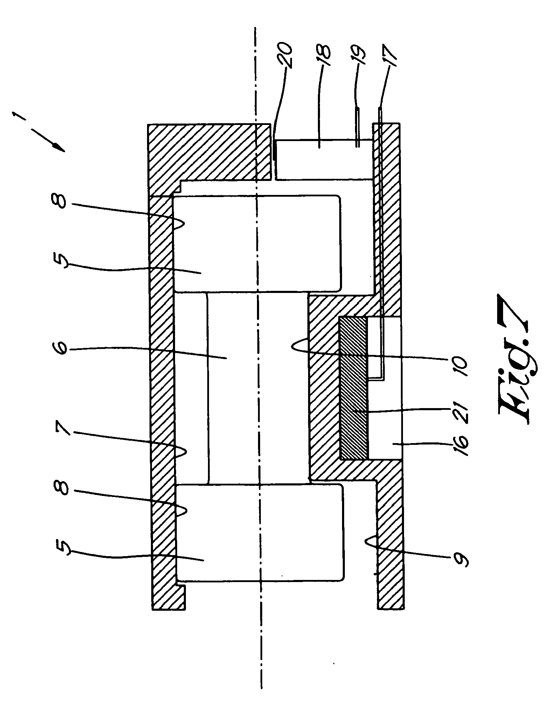

Figure 7 shows a roller bearing not falling within the scope of the invention with only cylindrical tracks in which the radial clearance is eliminated by the activation of a heating and/or cooling element 21.

The rollers of said bearing have only one recessed part 6 and two non-recessed parts 5, the parts 5 and 6 being cylindrical with a constant radius over their total length.

In this case the means for eliminating the clearance in the bearing 1 are formed by a heat sensitive actuator 21 with incorporated heating element, allowing a radial expansion of the inner track 10 of the inner ring 3 supporting the recessed part 6 of the rollers 4.

The actuator 21 can be thermally isolated by an insulating element 16.

As a variant of this embodiment, the outer ring 2 could be provided with a cooling element allowing the outer ring to shrink in a radial direction in order to take up the clearance.

According to another aspect of the invention, the bearing 1 is provided with anti-slip means for preventing the rollers 11 from slipping relative to the inner and/or outer tracks 8-10.

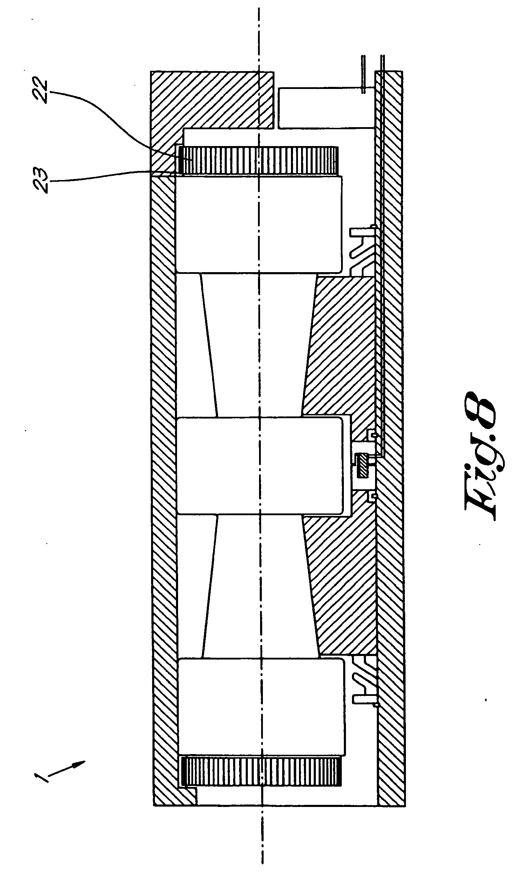

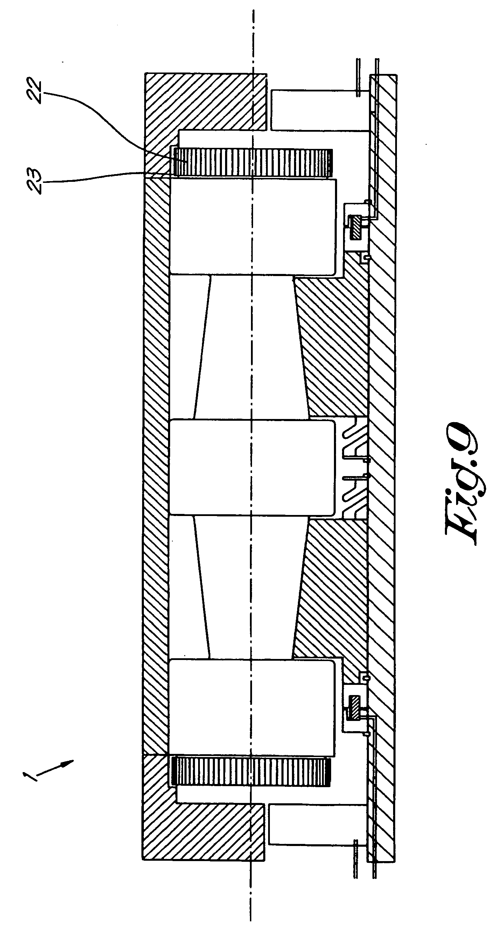

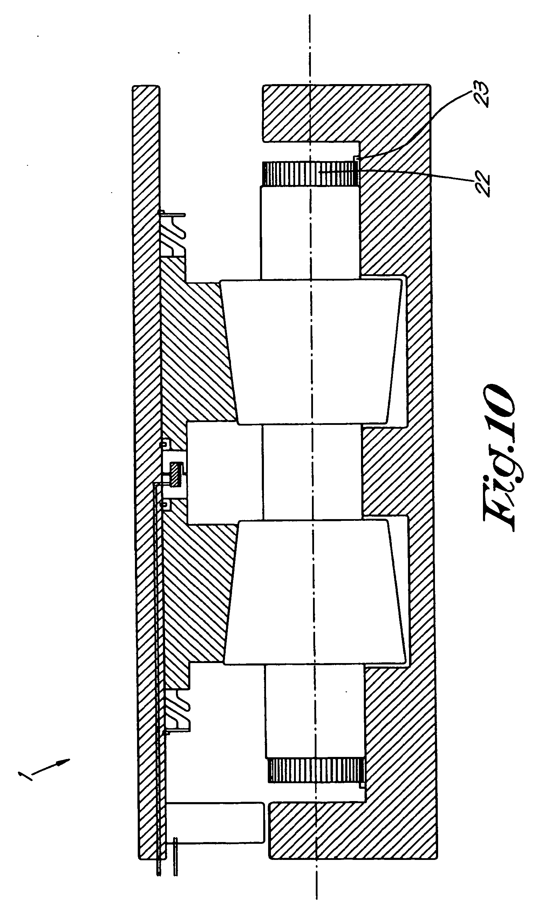

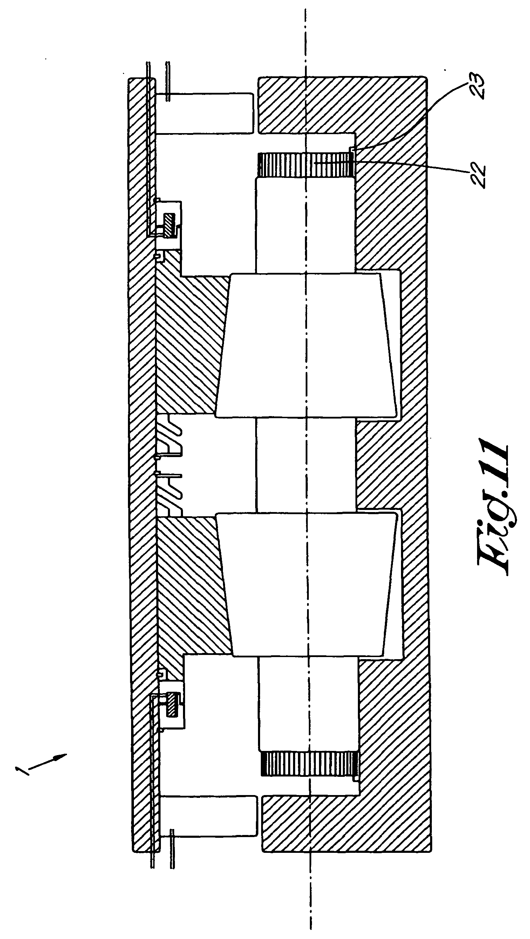

Figures 8 to 11 are examples of such bearings 1 wherein these means to prevent slipping are formed by a toothed pinion 22 provided co-axially on each axial extremity of one or preferably all rollers 4 and meshing with a ring gear 23.

Figures 8 to 11 correspond to the bearing embodiments of figures 3 to 6 respectively but with the above additional means to prevent slip.

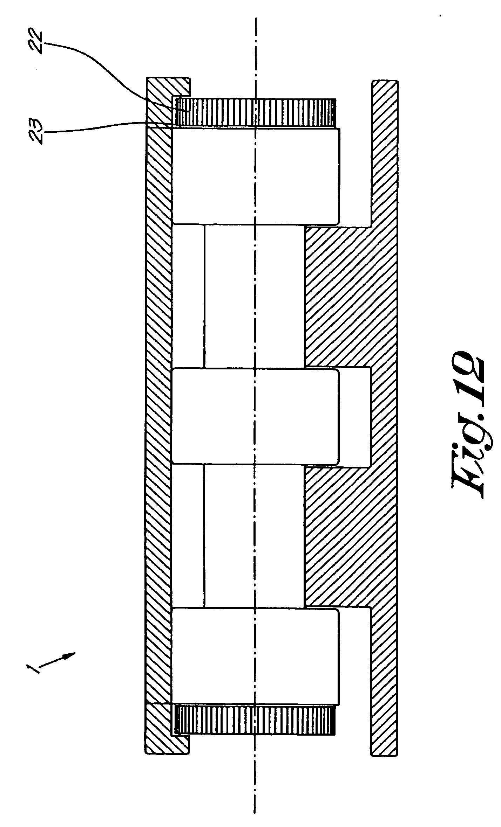

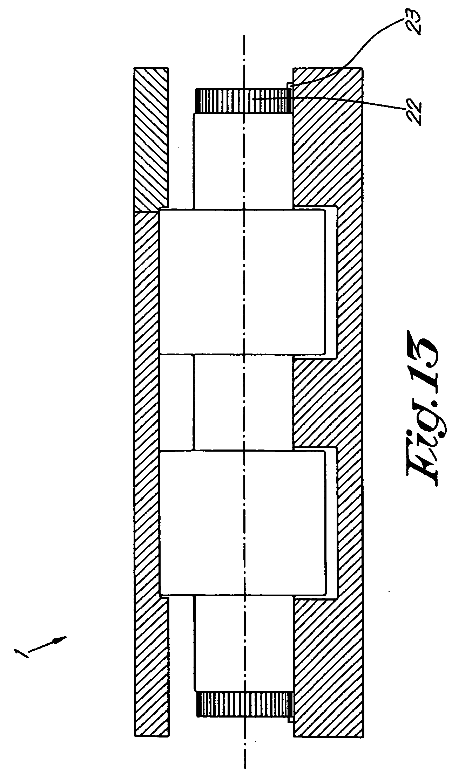

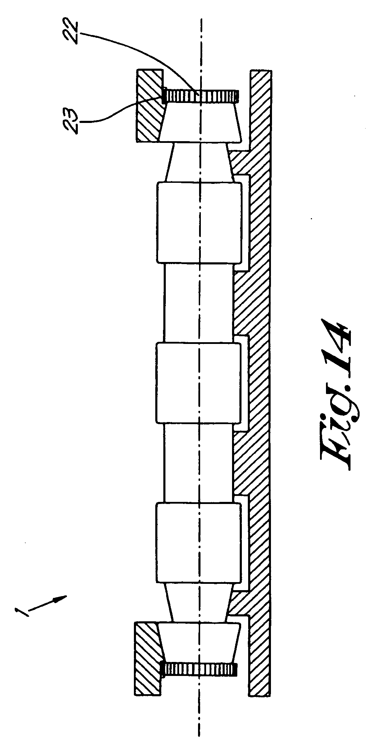

Figures 12 to 14 on the other hand are examples of bearings not within the scope of the present invention.

It is worth mentioning that the invention makes a cage for keeping the distance between the rollers 4 obsolete and that therefore in none of the drawings such a cage is represented.

The present invention is in no way limited to the forms of embodiment described by way of examples and represented in the figures, however, such an improved roller bearing according to the invention can be realised in various forms without leaving the scope of the invention.

## Claims

1.  An improved roller bearing of the type that comprises an outer ring (2) and an inner ring (3) and a plurality of rollers (4) disposed between the outer and the inner ring, the rollers (4) having at least one recessed part (6) stretching over at least a part of their axial length, whereby the outer ring (2) is provided on its radially inward surface (7) with at least one outer track (8) for co-operating with a non-recessed part (5) of the rollers (4) and the inner ring (3) is provided on its radially outward surface (9) with at least one inner track (10) for co-operating with a recessed part (6) of the rollers (4) and whereby the outer tracks (8) and the inner tracks (10) are mutually axially offset, **characterised in that** means (12) are provided to eliminate the radial clearance in the bearing (1) whereby said means (12) are such that they do not generate additional radial forces between the composing parts of the bearing (1) and said means (12) are formed by an actuator (15) controlled by a control circuit provided with a sensor (18) for determining the clearance in the bearing (1) and controlling the actuator (15) for maintaining a zero clearance and **in that** at least two inner tracks (10) or two outer tracks (8) are formed of a conical surface co-operating with a conical surface of the rollers (4), whereby the actuator (15) is a displacement actuator allowing the axial displacement of the conical inner or outer tracks (8-10) relative to the conical surface of the rollers (4) for eliminating the clearance in the bearing (1).

**2.** An improved roller bearing according to claim 1, **characterised in that** an inner track (10), respectively outer track (8), is formed by the conical outer surface, respectively by the conical inner surface, of a conical ring (11) which is mounted slidably in axial direction (X-X') inside the outer ring (2), respectively outside the inner ring (3), to co-operate with a conical surface of the rollers (4), whereby the actuator (15) allows the axial movement of the conical ring (11) relative to the rollers (4).

**3.** An improved roller bearing according to claim 1 or 2, **characterised in that** at least two inner tracks (10), respectively two outer tracks (8), are formed by the conical outer surface, respectively conical inner surface, of two conical rings (11) which are mounted slidably in axial direction (X-X') relative to each other inside the outer ring (2), respectively outside the inner ring (3), to co-operate with conical surfaces of the rollers (4), whereby the conical surfaces of the tracks (8-10) are tapered in opposite directions and whereby the actuator (15) allows the axial movement of both conical rings (11) relative to each other.

**4.** An improved roller bearing according to any of the previous claims, **characterised in that** the angle (A) enclosed between the conical surface and the axial direction is less than 5°, preferably less than 1°.

**5.** An improved roller bearing according to any of the previous claims, **characterised in that** the displacement actuator (15) is an element manufactured in a temperature expanding material, of which the expansion is controlled by a heating or cooling element.

**6.** An improved roller bearing according to claim 5, **characterised in that** the heat controlled displacement actuator (15) is thermally isolated from the rest of the bearing by a heat insulating material.

**7.** An improved roller bearing according to any of the claims 1 to 4, **characterised in that** the displacement actuator (15) is a piëzo-electrical element.

**8.** An improved roller bearing of the type that comprises an outer ring (2) and an inner ring (3) and a plurality of rollers (4) disposed between the outer and the inner ring, the rollers (4) having at least one recessed part (6) stretching over at least a part of their axial length, whereby the outer ring (2) is provided on its radially inward surface (7) with at least one outer track (8) for co-operating with a non-recessed part (5) of the rollers (4) and the inner ring (3) is provided on its radially outward surface (9) with at least one inner track (10) for co-operating with a recessed part (6) of the rollers (4) and whereby the outer tracks (8) and the inner tracks (10) are mutually axially offset, **characterised in that** means (12) are provided to eliminate the radial clearance in the bearing (1) whereby said means (12) are such that they do not generate additional radial forces between the composing parts of the bearing (1) and said means (12) are formed by an actuator (15) controlled by a control circuit provided with a sensor (18) for determining the clearance in the bearing (1) and controlling the actuator (15) for maintaining a zero clearance and **in that** the outer tracks (8) and the inner tracks (10) are cylindrical co-operating with respectively a corresponding cylindrical surface of the non-recessed parts (5) and the recessed parts (6) of the rollers (4), and **in that** the actuator (15) is formed by a heating and/or cooling element (21) allowing the outer ring (2) or the inner ring (3) to be heated or cooled at least locally in order to make the outer track (8) or inner track (10) to expand or to shrink in a radial direction.

**9.** An improved roller bearing according to any of the previous claims, **characterised in that** at least one transversal plane perpendicular to the axial direction (X-X') of the bearing (1), the ratio of the radius (R1) of the outer track (8) to the radius (R2) of the inner track (10) is equal to the ratio of the radius (r1) of the non-recessed part (5) of the roller (4) to the radius (r2) of the recessed part (6) of the roller (4).

**10.** An improved roller bearing according to any of the previous claims, **characterised in that** the control circuit stops activating the actuator (15) when the clearance reaches the minimum value and restarts activating the actuator (15) when the clearance deviates from this minimum value.

**11.** An improved roller bearing according to any of the previous claims, **characterised in that** the bearing (1) does not comprise a cage for the rollers (11).

**12.** An improved roller bearing according to any of the previous claims, **characterised in that** it is provided with additional anti-slip means for preventing the rollers (1) from slipping relative to the inner and/or outer tracks (10-8), which means are formed by a toothed pinion (22) provided co-axially on one ore more of the rollers (4) and meshing with a ring gear (23) provided on the inner or outer ring (2-3) of the bearing (1).

**Patentansprüche**

**1.** Verbessertes Wälzlager des Typs, der einen Außenring (2) und einen Innenring (3) und eine Vielzahl von zwischen dem Außen- und dem Innenring angeordneten Wälzkörpern (4) umfasst, wobei die Wälzkörper (4) mindestens einen eingesenkten Teil (6) aufweisen, der sich über mindestens einen Teil ihrer axialen Länge erstreckt, wobei der Außenring (2) an seiner radial einwärts gerichteten Oberfläche (7) mit mindestens einer äußeren Führung (8) zum Zusammenwirken mit einem nicht eingesenkten Teil (5) der Wälzkörper (4) versehen ist und der Innenring (3) an seiner radial auswärts gerichteten Oberfläche (9) mit mindestens einer inneren Führung (10) zum Zusammenwirken mit einem eingesenkten Teil (6) der Wälzkörper (4) versehen ist, und wobei die äußeren Führungen (8) und die inneren Führungen (10) gegenseitig axial versetzt sind, **dadurch gekennzeichnet, dass** Mittel (12) zum Eliminieren des Radialspiels in dem Lager (1) vorgesehen sind, wobei besagte Mittel (12) derart sind, dass sie keine zusätzlichen Radialkräfte zwischen den zusammenstellenden Teilen des Lagers (1) erzeugen und besagte Mittel (12) durch einen Aktor (15) gebildet werden, der von einem Steuerkreis gesteuert wird, der mit einem Sensor (18) versehen ist, zur Ermittlung des Spiels in dem Lager (1) und Steuerung des Aktors (15) zur Aufrechterhaltung von Spielfreiheit, und **dadurch**, dass mindestens zwei innere Führungen (10) oder zwei äußere Führungen (8) aus einer konischen Oberfläche gebildet sind, die mit einer konischen Oberfläche der Wälzkörper (4) zusammenwirkt, wobei der Aktor (15) ein Verstellaktor ist, der das axiale Verstellen der konischen inneren oder äußeren Führung (8-10) bezüglich der konischen Oberfläche der Wälzkörper (4) zur Eliminierung des Spiels in dem Lager (1) zulässt.

2. Verbessertes Wälzlager nach Anspruch 1, **dadurch gekennzeichnet, dass** eine innere Führung (10), beziehungsweise äußere Führung (8), durch die konische Außenfläche beziehungsweise durch die konische Innenfläche eines konischen Rings (11) gebildet wird, der in axialer Richtung (X-X') verschieblich in dem Außenring (2) beziehungsweise außerhalb des Innenrings (3) montiert ist, um mit einer konischen Oberfläche der Wälzkörper (4) zusammenzuwirken, wobei der Aktor (15) die axiale Bewegung des konischen Rings (11) in Bezug auf die Wälzkörper (4) zulässt.

3. Verbessertes Wälzlager nach Anspruch 1 oder 2, **dadurch gekennzeichnet, dass** mindestens zwei innere Führungen (10) beziehungsweise zwei äußere Führungen (8) durch die konische Außenfläche beziehungsweise konische Innenfläche zweier konischer Ringe (11) gebildet werden, die in Bezug zueinander in axialer Richtung (X-X') verschieblich in dem Außenring (2) beziehungsweise außerhalb des Innenrings (3) montiert sind, um mit konischen Oberflächen der Wälzkörper (4) zusammenzuwirken, wobei die konischen Oberflächen der Führungen (8-10) in entgegengesetzte Richtungen verjüngt sind und wobei der Aktor (15) die axiale Bewegung beider konischer Ringe (11) in Bezug zueinander zulässt.

4. Verbessertes Wälzlager nach einem der vorgenannten Ansprüche, **dadurch gekennzeichnet, dass** der zwischen der konischen Oberfläche und der axialen Richtung eingeschlossene Winkel (A) weniger als 5°, bevorzugt weniger als 1°, beträgt.

5. Verbessertes Wälzlager nach einem der vorgenannten Ansprüche, **dadurch gekennzeichnet, dass** der Verstellaktor (15) ein aus einem temperaturausdehnenden Material hergestelltes Element ist, dessen Ausdehnung durch ein Heiz- oder Kühlelement gesteuert wird.

6. Verbessertes Wälzlager nach Anspruch 5, **dadurch gekennzeichnet, dass** der wärmegesteuerte Verstellaktor (15) durch ein Wärmeisolationsmaterial vom Rest des Lagers thermisch isoliert ist.

7. Verbessertes Wälzlager nach einem der Ansprüche 1 bis 4, **dadurch gekennzeichnet, dass** der Verstellaktor (15) ein piezoelektrisches Element ist.

8. Verbessertes Wälzlager des Typs, der einen Außenring (2) und einen Innenring (3) und eine Vielzahl von zwischen dem Außen- und dem Innenring angeordneten Wälzkörpern (4) umfasst, wobei die Wälzkörper (4) mindestens einen eingesenkten Teil (6) aufweisen, der sich über mindestens einen Teil ihrer axialen Länge erstreckt, wobei der Außenring (2) an seiner radial einwärts gerichteten Oberfläche (7) mit mindestens einer äußeren Führung (8) zum Zusammenwirken mit einem nicht eingesenkten Teil (5) der Wälzkörper (4) versehen ist und der Innenring (3) an seiner radial auswärts gerichteten Oberfläche (9) mit mindestens einer inneren Führung (10) zum Zusammenwirken mit einem eingesenkten Teil (6) der Wälzkörper (4) versehen ist, und wobei die äußeren Führungen (8) und die inneren Führungen (10) gegenseitig axial versetzt sind, **dadurch gekennzeichnet, dass** Mittel (12) zum Eliminieren des Radialspiels in dem Lager (1) vorgesehen sind, wobei besagte Mittel (12) derart sind, dass sie keine zusätzlichen Radialkräfte zwischen den zusammenstellenden Teilen des Lagers (1) erzeugen und besagte Mittel (12) durch einen Aktor (15) gebildet werden, der von einem Steuerkreis gesteuert wird, der mit einem Sensor (18) versehen ist, zur Ermittlung des Spiels in dem Lager (1) und Steuerung des Aktors (15) zur Aufrechterhaltung von Spielfreiheit, und **dadurch**, dass die äußeren Führungen (8) und die inneren Führungen (10) zylindrisch sind, zusammenwirkend mit einer entsprechenden zylindrischen Oberfläche der nicht eingesenkten Teile (5) beziehungsweise der eingesenkten Teile (6) der Wälzkörper (4), und dass der Aktor (15) durch ein Heiz- und/oder Kühlelement (21) gebildet wird, das gestattet, den Außenring (2) oder den Innenring (3) mindestens örtlich zu erhitzen oder zu kühlen, um die äußere Führung (8) oder innere Führung (10) in einer radialen Richtung ausdehnen oder schrumpfen zu lassen.

9. Verbessertes Wälzlager nach einem der vorgenannten Ansprüche, **dadurch gekennzeichnet, dass** in mindestens einer quergerichteten Ebene senkrecht zur axialen Richtung (X-X') des Lagers (1), das Verhältnis des Radius (R1) der äußeren Führung (8) zu dem Radius (R2) der inneren Führung (10) gleich dem Verhältnis des Radius (r1) des nicht eingesenkten Teils (5) des Wälzkörpers (4) zu dem Radius (r2) des eingesenkten Teils (6) des Wälzkörpers (4) ist.

10. Verbessertes Wälzlager nach einem der vorgenannten Ansprüche, **dadurch gekennzeichnet, dass** der Steuerkreis das Aktivieren des Aktors (15) stoppt, wenn das Spiel den Mindestwert erreicht, und das Aktivieren des Aktors (15) wieder startet, wenn das Spiel von diesem Mindestwert abweicht.

11. Verbessertes Wälzlager nach einem der vorgenannten Ansprüche, **dadurch gekennzeichnet, dass** das Lager (1) keinen Käfig für die Wälzkörper (11) umfasst.

12. Verbessertes Wälzlager nach einem der vorgenannten Ansprüche, **dadurch gekennzeichnet, dass** es mit zusätzlichen schlupfverhindernden Mitteln versehen ist, um einen Schlupf der Wälzkörper (1) bezüglich der inneren und/oder äußeren Führung (10-8) zu verhindern, welche Mittel durch ein verzahntes Ritzel (22) gebildet werden, das koaxial an einem oder mehreren der Wälzkörper (4) vorgesehen ist und in einem an dem Innen- oder Außenring (2-3) des Lagers (1) vorgesehenen Ringrad (23) eingreift.

**Revendications**

1. Roulement à rouleaux perfectionné du type qui comprend une bague extérieure (2) et une bague intérieure (3) et plusieurs rouleaux (4) qui sont disposés entre la bague extérieure et la bague intérieure, les rouleaux (4) comportant au moins une partie évidée (6) qui s'étend sur au moins une partie de leur longueur axiale, la bague extérieure (2) étant munie, sur sa surface interne (7) en direction radiale d'au moins un chemin de roulement externe (8) destiné à coopérer avec une partie non évidée (5) des rouleaux (4) et la bague intérieure (3) étant munie, sur sa surface externe (9) en direction radiale, d'au moins un chemin de roulement interne (10) destiné à coopérer avec une partie évidée (6) des rouleaux (4), et par lequel les chemins de roulement externes (8) et les chemins de roulement internes (10) sont décalés les uns des autres en direction axiale, **caractérisé en ce que** l'on prévoit des moyens (12) pour éliminer le jeu radial dans le roulement, lesdits moyens (12) étant tels qu'ils ne génèrent pas des forces radiales supplémentaires entre les parties constitutives du roulement (1) et lesdits moyens (12) étant réalisés à l'aide d'un actionneur (15) commandé par un circuit de commande muni d'un capteur (18) pour déterminer le jeu dans le roulement (1) et pour commander l'actionneur (15) afin de maintenir un jeu nul, et **en ce qu'**au moins deux chemins de roulement internes (10) ou deux chemins de roulement externes (8) sont réalisés à l'aide d'une surface conique coopérant avec une surface conique des rouleaux (4), l'actionneur (15) représentant un actionneur de déplacement qui permet le déplacement axial des chemins de roulement coniques internes ou externes (8-10) par rapport à la surface conique des rouleaux (4) pour éliminer le jeu dans le roulement (1).

2. Roulement à rouleaux perfectionné selon la revendication 1, **caractérisé en ce qu'**un chemin de roulement interne (10), respectivement un chemin de roulement externe (8) est réalisé à l'aide de la surface externe conique, respectivement à l'aide de la surface interne conique d'un anneau conique (11) qui est monté en coulissement en direction axiale (X-X') à l'intérieur de la bague extérieure (2), respectivement à l'extérieur de la bague intérieure (3), dans le but de coopérer avec une surface conique des rouleaux (4), l'actionneur (15) permettant le mouvement axial de l'anneau conique (11) par rapport aux rouleaux (4).

3. Roulement à rouleaux perfectionné selon la revendication 1 ou 2, **caractérisé en ce qu'**au moins deux chemins de roulement internes (10), respectivement deux chemins de roulement externes (8) sont réalisés à l'aide de la surface externe conique, respectivement à l'aide de la surface interne conique de deux anneaux coniques (11) qui sont montés en coulissement en direction axiale (X-X') l'un par rapport à l'autre à l'intérieur de la bague extérieure (2), respectivement à l'extérieur de la bague intérieure (3), dans le but de coopérer avec des surfaces coniques des rouleaux (4), les surfaces coniques des chemins de roulement (8-10) présentant des conicité orientées dans des directions opposées, et l'actionneur (15) permettant le mouvement axial des deux anneaux coniques (11) l'un par rapport à l'autre.

4. Roulement à rouleaux perfectionné selon l'une quelconque des revendications précédentes, **caractérisé en ce que** l'angle (A) formé entre la surface conique et la direction axiale est inférieur à 5°, de préférence inférieur à 1°.

5. Roulement à rouleaux perfectionné selon l'une quelconque des revendications précédentes, **caractérisé en ce que** l'actionneur de déplacement (15) est un élément fabriqué en un matériau qui se dilate à la chaleur, ladite dilatation étant commandée par un élément de chauffage ou de refroidissement.

**6.** Roulement à rouleaux perfectionné selon la revendication 5, **caractérisé en ce que** l'actionneur de déplacement (15) à commande thermique est muni d'une isolation thermique par rapport au reste du roulement via un matériau procurant une isolation thermique.

**7.** Roulement à rouleaux perfectionné selon l'une quelconque des revendications 1 à 4, **caractérisé en ce que** l'actionneur de déplacement (15) est un élément piézo-électrique.

**8.** Roulement à rouleaux perfectionné du type qui comprend une bague extérieure (2) et une bague intérieure (3) et plusieurs rouleaux (4) qui sont disposés entre la bague extérieure et la bague intérieure, les rouleaux (4) comportant au moins une partie évidée (6) qui s'étend sur au moins une partie de leur longueur axiale, la bague extérieure (2) étant munie, sur sa surface interne (7) en direction radiale d'au moins un chemin de roulement externe (8) destiné à coopérer avec une partie non évidée (5) des rouleaux (4) et la bague intérieure (3) étant munie, sur sa surface externe (9) en direction radiale, d'au moins un chemin de roulement interne (10) destiné à coopérer avec une partie évidée (6) des rouleaux (4), et par lequel les chemins de roulement externes (8) et les chemins de roulement internes (10) sont décalés les uns des autres en direction axiale, **caractérisé en ce que** l'on prévoit des moyens (12) pour éliminer le jeu radial dans le roulement, lesdits moyens (12) étant tels qu'ils ne génèrent pas des forces radiales supplémentaires entre les parties constitutives du roulement (1) et lesdits moyens (12) étant réalisés à l'aide d'un actionneur (15) commandé par un circuit de commande muni d'un capteur (18) pour déterminer le jeu dans le roulement (1) et pour commander l'actionneur (15) afin de maintenir un jeu nul, et **en ce que** les chemins de roulement externes (8) et les chemins de roulement internes (10) sont cylindriques pour coopérer avec respectivement une surface cylindrique correspondante des parties non évidées (5) et des parties évidées (6) des rouleaux (4), et **en ce que** l'actionneur (15) est réalisé à l'aide d'un élément de chauffage et/ou de refroidissement (21) qui permet de chauffer ou de refroidir la bague extérieure (2) ou la bague intérieure (3) au moins localement pour obtenir une dilatation ou un rétrécissement en direction radiale du chemin de roulement externe (8) ou du chemin de roulement interne (10).

**9.** Roulement à rouleaux perfectionné selon l'une quelconque des revendications précédentes, **caractérisé en ce que**, dans au moins un plan transversal perpendiculaire à la direction axiale (X-X') du roulement (1), le rapport du rayon (R1) du chemin de roulement externe (8) au rayon (R2) du chemin de roulement interne (10) est égal au rapport du rayon (r1) de la partie non évidée (5) des rouleaux (4) au rayon (r2) de la partie évidée (6) des rouleaux (4).

**10.** Roulement à rouleaux perfectionné selon l'une quelconque des revendications précédentes, **caractérisé en ce que** le circuit de commande arrête l'activation de l'actionneur (15) lorsque le jeu atteint la valeur minimale et relance l'activation de l'actionneur (15) lorsque le jeu s'écarte de cette valeur minimale.

**11.** Roulement à rouleaux perfectionné selon l'une quelconque des revendications précédentes, **caractérisé en ce que** le roulement (1) ne comprend pas de cage pour les rouleaux (4).

**12.** Roulement à rouleaux perfectionné selon l'une quelconque des revendications précédentes, **caractérisé en ce qu'**il est muni de moyens antiglissement supplémentaires pour empêcher les rouleaux (4) de glisser par rapport aux chemins de roulement internes et/ou externes (10-8), lesdits moyens étant réalisés à l'aide d'un pignon denté (22) prévu en position coaxiale sur un ou plusieurs des rouleaux (4) et qui vient s'engrener avec une couronne dentée (23) prévue sur la bague intérieure ou extérieure (2-3) du roulement (1).

Fig.1

*Fig.2*

Fig.3

Fig. 4

Fig.5

Fig.6

Fig.7

Fig.8

Fig.9

Fig.10

Fig.11

*Fig. 19*

*Fig.13*

22    23

EP 2 058 538 B1

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 1274450